Europäisches Patentamt

European Patent Office

Office européen des brevets

(11) Veröffentlichungsnummer: **0 273 118 B1**

(12) **EUROPÄISCHE PATENTSCHRIFT**

(45) Veröffentlichungstag der Patentschrift: **23.09.92**

(21) Anmeldenummer: **87114655.1**

(22) Anmeldetag: **22.02.84**

(60) Veröffentlichungsnummer der früheren
Anmeldung nach Art. 76 EPÜ: **0 117 528**

(51) Int. Cl.⁵: **G01N 27/416**, G01N 30/64

(54) **Verfahren und Vorrichtung zur elektrochemischen Detektion.**

(30) Priorität: **01.03.83 DE 3307154**

(43) Veröffentlichungstag der Anmeldung:
**06.07.88 Patentblatt 88/27**

(45) Bekanntmachung des Hinweises auf die
Patenterteilung:
**23.09.92 Patentblatt 92/39**

(84) Benannte Vertragsstaaten:
**CH DE FR GB IT LI NL SE**

(56) Entgegenhaltungen:

**I.E.C. PRODUCT ON RESEARCH AND DEVE-
LOPMENT, Band 20, Nr. 4, Dezember 1981,
Seiten 593-598, Washington, US; S.G. WEBER
et al.: "Electrochemical detectors in liquid
chromatography. A short review of detector
design"**

**PATENT ABSTRACTS OF JAPAN, Band 5, Nr.
100 (P-68)[772], 27. Juni 1981; & JP - A - 56
44836 (NIPPON BUNKOU KOGYO K.K.)
24.04.1981**

(73) Patentinhaber: **Rall, Gerhard, Dipl.-Ing.
Bozzarisstrasse 39f
W-8000 München 90(DE)**

(72) Erfinder: **Rall, Gerhard, Dipl.-Ing.
Bozzarisstrasse 39f
W-8000 München 90(DE)**

(74) Vertreter: **Klunker . Schmitt-Nilson . Hirsch
Winzererstrasse 106
W-8000 München 40(DE)**

EP 0 273 118 B1

ANALYTICAL CHEMISTRY, Band 53, Nr. 1, Seiten 74-77, Januar 1981, Easton, Pennsylvania, US; W.A. MacCREHAN "Differential pulse detection in liquid chromatography and its application to the measurement of organometal cations"

TRENDS IN ANALYTICAL CHEMISTRY, Band 1, Nr. 6, Februar 1982, Seiten 135-140, Cambridge, GB; H.B. HANEKAMP et al.: "Electrochemical detectors in flowing liquid systems: an assessment of their use"

JOURNAL OF CHROMATOGRAPHY, Band 213, 1981, Seiten 41-46, Amsterdam, NL; K. STULIK et al.: "Carbon pastes for voltammetric detectors in high-performance liquid chromatography"

VOl. 2 ADV., ANAL. and CLINIC CHEM,, PLENUM, New York, 1978

## Beschreibung

Die Erfindung betrifft einen elektrochemischen Detektor zur elektrochemischen Detektion von mindestens eine zu analysierende Substanz enthaltenden Lösungen. Der elektrochemische Detektor weist eine Detektorzelle auf mit einem Einlaß und einem Auslaß für eine zu analysierende, elektrolytische Lösung, mit einer Arbeitselektrode, die sich in Kontakt mit der durch die Durchlaßkammer strömenden Lösung befindet, und mit einer Gegenelektrodenanordnung, mit der der Lösung ein elektrisches Potential gegenüber der Arbeitselektrode aufprägbar ist, das die Elektrolyse der an der Arbeitselektrode zu analysierenden Substanzen in der Lösung bewirken kann, wobei mittels der Gegenelektrodenanordnung eine für die Elektrolyse erforderliche Potentialdifferenz zwischen Arbeitselektrode und Elektrolyt eingestellt wird und der an der Arbeitselektrode entstehende Elektrolysestrom als Analysemeßwert abgenommen wird.

Ein wichtiges Einsatzgebiet für den elektrochemischen Detektor ist die Flüssigkeitschromatographie. Bei diesem Analyseverfahren wird die zu analysierende Substanz einer Trägerflüssigkeit, die von einer Pumpe geliefert wird, zugegeben und die so entstehende Lösung auf eine analytische Säule gegeben. Diese Säule weist eine Retentionswirkung auf. Das heißt, verschiedene Substanzen des Probengemisches in der Lösung verweilen auf der Säule verschieden lange. Am Ausgang der Säule treten dann die einzelnen Substanzen des Probengemisches zeitlich nacheinander auf und können somit einzeln analysiert werden.

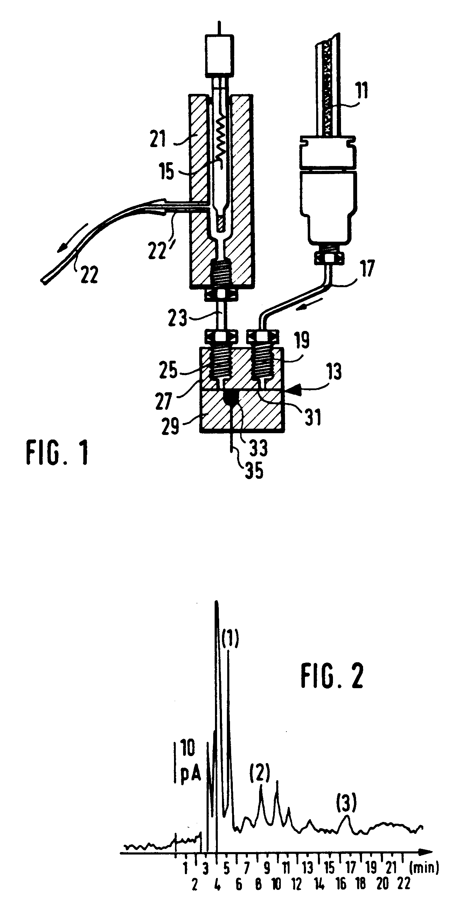

Die Analyse kann man mit Hilfe eines elektrochemischen Detektors durchführen, der eine Detektorzelle mit den eingangs angegebenen Merkmalen aufweist. Vorzugsweise ist die Durchlaßkammer dieser Detektorzelle so aufgebaut, daß die durch sie strömende elektrolytische Lösung die Form einer Dünnschicht annimmt. Ein Beispiel eines derartigen elektrochemiscen Detektors mit den im Oberbegriff des Anspruchs 1 bzw. Anspruchs 2 aufgeführten Merkmalen ist in Fig. 1 gezeigt, die der Schrift "Detectors for Trace Organic Analysis by Liquid Chromatography: Principles and Applications aus Vol. 2 ADV. ANAL. and CLINIC. CHEM., PLENUM, NEW YORK, '78 entnommen ist. Die von der analytischen Säule kommende elektrolytische Lösung wird über einen Kunststoffschlauch zu einem Einlaß geführt, durchläuft eine Dünnschicht-Durchlaßkammer, in die eine Arbeitselektrode hineinreicht und verläßt die Detektorzelle über einen Auslaß. Von dort gelangt die elektrolytische Lösung über einen Kunstoffschlauch zu einem ein Gehäuse mit einer Meßelektrode, mit der das elektrische Potential der elektrolytischen Lösung gemessen wird. Von diesem Gehäuse aus gelangt die elektrolytische Lösung über eine Ablaufleitung zu einem Ablauf für die elektrolytische Lösung. Ein Teil der Ablaufleitung ist dabei ein kurzes Metallrohrstück, das als Hilfselektrode verwendet wird, über die ein Potential auf die elektrolytische Lösung aufgebracht wird. Die Hilfselektrode wird benötigt, weil die üblichen Meßelektroden stromunverträglich sind. Der Strom, der über die Arbeitselektrode infolge einer Oxidation oder Reduktion der elektrolytischen Lösung abfließt, wird somit über die Hilfselektrode zugeführt. Wie in der oben genannten Schrift ausgeführt ist, wird die zum Ionisieren der elektrolytischen Lösung erforderliche Potentialdifferenz zwischen dem Elektrolyten und der Arbeitselektrode dadurch hergestellt, daß die Arbeitselektrode auf Massepotential gehalten wird und daß der Elektrolyt mit Hilfe der Hilfselektrode auf die erforderliche Potentialdifferenz gegenüber der Arbeitselektrode gebracht wird. Zu diesem Zweck wird mittels der Meßelektrode das Elektrolytpotential gemessen und das Potential der Hilfselektrode mit Hilfe dieses Meßwertes auf die gewünschte Potentialdifferenz zwischen Elektrolyt und Arbeitselektrode geregelt.

Den bei der Oxidation oder der Reduktion an der Arbeitselektrode auftretenden Strom kann man, üblicherweise nach einer Strom-Spannung-Wandlung, auf den Eingang eines Meßwertschreibers geben. Dieser schreibt ein Chromatogramm, das einen bestimmten Grundsignalwert und daraus herausragende Peaks (Meßsignalspitzen) zeigt, deren Lage auf der Zeitachse des Chromatogramms von der Art, und deren Höhe von der Konzentration der zu analysierenden Substanzen in der elektrolytischen Lösung abhängt. Dem Grundsignalwert ist eine Rausch- und Störspannung überlagert, deren Amplitude eine Auflösungsbegrenzung für das Chromatogramm darstellt. Daher werden große Anstrengungen gemacht, um den Rauschanteil des Grundwertsignals so niedrig wie möglich zu halten, um auch sehr geringe Substanzmengen analysieren zu können.

Aus dem Artikel "Optimierung des Signal/Rausch-Verhältnisses bei der elektrochemischen Detektion der Katecholamine in Plasma- und Urinproben" von W. Bauersfeld und H. Wissner, erschienen in der Sammlung "Königsteiner Chromatographietage 4. bis 6. Oktober 1982, Travemünde/Ostsee" (Seminar der Firma Waters), ist es bekannt, zur Verringerung des Störanteils des Chromatogramms einerseits die Detektorzelle in einem Faraday-Käfig unterzubringen und andererseits für die Detektorelektronik ein zusätzliches Filter zu verwenden. Auf diese Weise ist man zu einer zuvor nicht erreichten Verringerung des Rauschens bis aufeinen Spitze-Spitze-Wert von 2 $pA_{ss}$ vorgedrungen, wie das Chromatogramm in Fig. 2 zeigt, das der zuvor genannten Schrift entnommen ist.

Der Erfindung liegt die Aufgabe zugrunde, einen elektrochemischen Detektor verfügbar zu machen, mit dem sich der Störanteil im Chromatogramm noch wesentlich verringern und damit die Analyseempfindlichkeit deutlich erhöhen läßt.

Elektrochemische Detektoren zur Lösung dieser Aufgabe sind in den Ansprüchen 1 und 2 angegeben und können gemäß den Ansprüchen 3 bis 10 vorteilhaft weitergebildet werden.

Der Erfindung liegt die Erkenntnis zugrunde, daß ein elektrochemischer Detektor der beschriebenen Art komplexen Störeinflüssen ausgesetzt ist, die insbesondere Erdschleifenprobleme, aber auch Störfeldeinstrahlungen und kapazitiv Einfluß nehmende elektrostatische Felder umfassen. Erdschleifenprobleme entstehen dadurch, daß verschiedene Komponenten des chromatographischen Systems unterschiedliches Massepotential aufweisen können, weil die an die Masseanschlüsse dieser Komponenten angeschlossenen Erdungsleiter verschiedenes Potential aufweisen können, beispielsweise aufgrund von thermoelektrischen Erscheinungen an Steckverbindern, Leitungsanschlüssen u.s.w.. Da die durch das chromatographische System fließende elektrolytische Lösung selbst als elektrischer Leiter wirkt, treten in dem Meßsystem Störspannungen auf, die zu einer störenden Beeinflussung der Differenz zwischen dem Potential der Arbeitselektrode und dem Potential des Elektrolyten im Bereich der Arbeitselektrode führen.

Um einerseits den Elektrolyten in der gesamten Detektoranordnung auf möglichst konstantem Potential zu halten und um andererseits Einflüsse von Störfeldern und elektrostatischen Feldern abzuwehren, bildet man die Detektorzelle mit einem den Einlaß und den Auslaß aufnehmenden metallischen Gehäuseblock aus und macht man die Einlaßzuleitung bis hin zur Lösungsquelle, Vorzugsweise bis zur Pumpe, und Vorzugsweise auch die Auslaßleitung, aus Metall. Um eine Flexibilität der Leitungen zu erhalten, kann man sie aus Kunststoffschläuchen herstellen, die außen oder innen mit Metall beschichtet sind oder mit einem metallischen Schirmgeflecht überzogen sind. Dabei verwendet man für die Einlaßzuleitung und die Auslaßleitung vorzugsweise dasselbe Metall wie für den Gehäuseblock, um Potentialsprünge zwischen dem Gehäuseblock und diesen Leitungen zu vermeiden.

Aus Analytical Chemistry, Bd. 53, Nr. 1, S. 74-77, ist zwar bereits ein elektrochemischer Detektor bekannt, dessen Detektorzelle mit einer Saüle über ein Stahlrohr verbunden ist, wobei ein Gehäuseteil der Detektorzelle den Einlaß und den Auslaß aufweist. Dabei bestehen aber die Gehäuseteile der Detektorzelle aus Kunststoff.

In besonders bevorzugter Weise bildet man die Detektorzelle vollständig aus Metall aus, wobei die Arbeitselektrode und die Meßelektrode je in den sie aufnehmenden Gehäuseteil isoliert eingebettet sind, die Meßelektrode mittels des zu ihr gehörenden isolierenden Mantels, und die Arbeitselektrode, vorzugsweise auch die Meßelektrode, einschließlich ihrer Zuleitung mit einer Abschirmung versehen sind. Dann braucht man die Meßanordnung nicht in einem Faraday-Käfig anzuordnen, der platzraubend ist und den Zugang zu der Meßanordnung erschwert.

Für den Fall der Verwendung einer stromunverträglichen Meßelektrode besteht die Gegenelektrodenanordnung aus der Meßelektrode und der Hilfselektrode. Bei Verwendung einer strombelastbaren Meßelektrode kann die Gegenelektrodenanordnung ausschließlich aus der Meßelektrode bestehen und kann die Hilfselektrode wegfallen.

Im folgenden werden die Erfindung sowie Weiterbildungen und Ausgestaltungen der Erfindung anhand von Ausführungsformen näher erläutert. In den Zeichnungen zeigen:

Figur 1     den bereits erwähnten herkömmlichen elektrochemischen Detektor;

Figur 2     das bereits erwähnte, mit einem herkömmlichen elektrochemischen Detektor erhaltene Chromatogramm;

Figur 3     eine Ausführungsform einer erfindungsgemäßen Vorrichtung zur elektrochemischen Detektion;

Figur 4     eine Ausführungsform eines erfindungsgemäßen elektrochemischen Detektors mit abgewandelter Detektorzelle; und

Figur 5     ein mit der erfindungsgemäßen Vorrichtung zur elektrochemischen Detektion erhaltenes Chromatogramm.

Der in Figur 1 gezeigte herkömmliche elektrochemische Detektor weist eine Detektorzelle 13 und eine Meßelektrode 15 auf. Eine analytische Säule 11 ist mittels einer Einlaßzuleitung 17 aus Kunststoff mit einem Einlaß 19 der Detektorzelle 13 verbunden. Die Meßelektrode 15 ist in einem Meßelektrodengehäuse 21 untergebracht, mit dem ein Auslaß 25 der Detektorzelle 13 über eine Auslaßleitung 23 aus Kunststoff verbunden ist. Das Meßelektrodengehäuse 21 weist eine Auslaßleitung 22 auf, von der ein kurzes Stück 22' als Metallrohr ausgebildet ist, das als Hilfselektrode dient.

Die Detektorzelle 13 besteht aus zwei Gehäuseteilen 27 und 29 aus Kunststoff, zwischen denen eine Durchlaßkammer 31 gebildet ist. In diese münden in einem Abstand voneinander der Einlaß 19 und der Auslaß 25 ein, die in dem oberen Gehäuseteil 27 gebildet sind. In den unteren Gehäuseteil 29 ist eine Arbeitselektrode 33 eingebettet, die in die Durchlaßkammer 31 hineinreicht und mit der durch die Durchlaßkammer 31 strömenden elektrolytischen Lösung in elektrischem Kontakt ist. Die Durchlaßkammer 31 ist so aufgebaut, daS die durch sie strömende elektrolytische Lösung die Form einer Dünnschicht annimmt. An die Arbeitselektrode 33 ist eine elektrische Zuleitung 35 angeschlossen.

Im Betrieb wird die Arbeitselektrode auf Massepotential gehalten und es wird der elektrolytischen Lösung mit Hilfe der Hilfselektrode 22' ein Potential aufgeprägt, so daß die elektrolytische Lösung die zur elektrochemischen Detektion erforderliche Potentialdifferenz gegenüber dem Arbeitselektrodenpotential aufweist. Das Potential des Elektrolyten wird mit der Meßelektrode 15 gemessen und mit der Hilfselektrode 22' auf den Sollwert geregelt.

Der an der Arbeitselektrode 33 auftretende Strom wird nach einer Verarbeitung, insbesondere einer Strom-Spannung-Wandlung, einer veränderbaren Verstärkung und einer Filterung, auf den Eingang eines Chromatogramm-Schreibers gegeben.

Auf seinem Weg von der Säule 11 bis zur Hilfselektrode 22' kann die elektrolytische Lösung zahlreichen Störungen ausgesetzt sein. Üblicherweise weisen die Säule 11 und die ihr vorgeschaltete Pumpe ein Metallgehäuse auf . Aus Sicherheitsgründen sind deren Gehäuse geerdet. Aufgrund der bereits erwähnten Probleme können die Massepotentiale, auf denen die Pumpe, die Säule 11 und die Arbeitselektrode 33 liegen, verschieden sein. Die als elektrischer Leiter wirkende elektrolytische Lösung ist daher einem Potentialgemisch ausgesetzt, aufgrunddessen das Potential des Elektrolyten im Bereich der Arbeitselektrode 33 von dem Potential des Elektrolyten im Bereich der Meßlelektrode und dieses wieder vom Potential des Elektrolyten im Bereich der Hilfselektrode 22' verschieden sein kann. Schwankungen des Elektrolytpotentials am Ort der Meßelektrode 15 können daher verschieden sein von den Schwankungen des Elektrolytpotentials am Ort der Arbeitselektrode 33. Dies hat zur Folge, daß der Elektrolyt im Bereich der Arbeitselektrode 33 ein anderes Potential aufweist als im Bereich der Meßelektrode 15, deren Potential mit der Hilfselektrode 22' geregelt wird. Dies verursacht Störüberlagerungen des Grundsignals des Chromatogramms.

Außerdem können Hochfrequenzfelder und von aufgeladenen Gegenständen oder Personen stammende elektrostatische Felder auf die elektrolytische Lösung einwirken, während sie aus der Säule 11 durch die Kunststoff-Einlaßzuleitung 17, das Kunststoffgehäuse des Detektors 13 und die Kunststoff-Auslaßleitung 23 zur Meßelektrode 15 und von dort weiter zur Hilfselektrode 22' fließt. Letztere Störungen machen es erforderlich, daß herkömmliche elektrochemische Detektoren in Faraday-Käfigen betrieben werden müssen.

Figur 2 zeigt das bereits erwähnte, mit einer herkömmlichen elektrochemischen Detektorvorrichtung erhaltene Chromatogramm. Dieses Chromatogramm zeigt über die Zeitachse verteilt drei Peaks, von denen Peak (1) von 22 pg Noradrenalin, Peak (2) von 7 pg Adrenalin und Peak (3) von 5 pg Dopamin stammt. Anhand des ins Chromatogramm eingezeichneten Ordinatenmaßstabs von 10 pA/cm kann man erkennen, daß dem Grundsignalwert dieses Chromatogramms ein Rausch- und Störsignal mit einem Spitze-Spitze-Wert von etwa 2 $pA_{ss}$ überlagert ist.

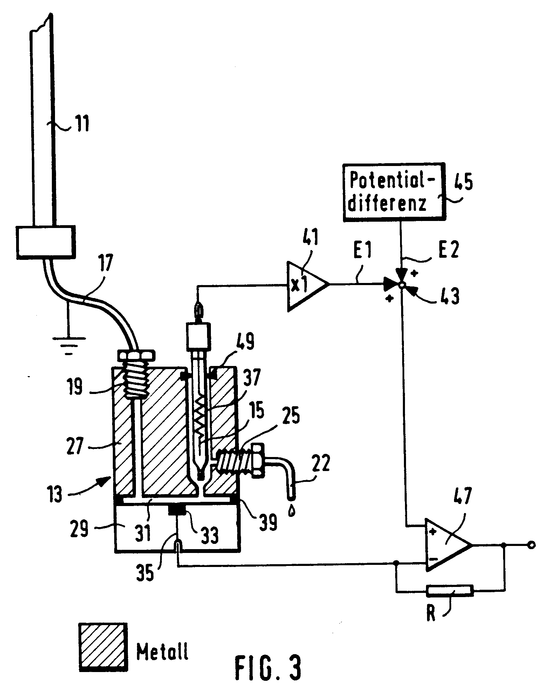

Eine erste Ausführungsform eines erfindungsgemäßen elektrochemischen Detektors ist in Figur 3 gezeigt. In dieser sind Komponenten, die mit Komponenten in Figur 1 übereinstimmen,mit gleichen Bezugszeichen gekennzeichnet. Die Betriebsweise ist die gleiche wie bei dem elektrochemischen Detektor in Figur 1, sofern nachfolgend nichts anderes angegeben ist.

Der in Figur 3 dargestellte elektrochemische Detektor weist eine Detektorzelle 13 auf, deren (in der Figur) oberer Gehäuseteil 27 aus einem Metallblock besteht, in den sowohl der Einlaß 19 als auch der Auslaß 25 münden. Außerdem weist der Metallblock 27 eine Meßelektrodenöffnung 37 auf, in welche die Meßelektrode 15 so eingesetzt ist, daß sich ihr Meßende in der Nähe der Durchlaßkammer 31 befindet. Die Einlaßzuleitung 17 und auch die Auslaßleitung 22 bestehen aus Metallröhren. Für diese Metallröhren wird vorzugsweise das gleiche Material wie für den Metallblock 27 gewählt, um Potentialsprünge an den Übergangsstellen zwischen den Metallröhren und dem Metallblock zu vermeiden.

Das in Figur 3 untere Gehäuseteil 29 besteht aus einem Kunststoffblock, der mit Hilfe einer als Abstandsstück wirkenden Dichtung 39 in einem Abstand vom metallischen oberen Gehäuseteil 27 gehalten wird, um zwischen diesen beiden Gehäuseteilen 27 und 29 die Durchlaßkammer 31 zu bilden.

Die Hilfselektrode, gebildet durch die metallische Einlaßzuleitung 17 und die mit ihr verbundenen Metallteile der Anordnung, wird nicht dazu benutzt, den Elektrolyten auf eine Potentialdifferenz gegenüber der Arbeitselektrode 33 zu regeln, sondern die Hilfselektrode wird auf Massepotential gelegt. Mit der Meßelektrode 15 wird das Potential des Elektrolyten in der Nähe der Arbeitselektrode 33 gemessen, und der gemessene Wert wird über einen Impedanzwandler 41 auf einen ersten Eingang E1 einer Summierschaltung 43 gegeben. An diesem Eingang E1 ist der jeweilige Potentialmomentanwert des Elektrolyten am Ort der Meßelektrode 15 verfügbar. Ein zweiter Eingang E2 der Summierschaltung 43 ist mit dem Ausgang einer Potentialdifferenzquelle 45 verbunden. Die Potentialdifferenzquelle 45 liefert eine Spannung, die der gewünschten Differenz zwischen dem Potential des Elektrolyten im Bereich der Arbeitselektrode 33 und dem Potential der Arbeitselektrode 33 selber entspricht. Der Ausgang der Summierschaltung 43 wird daher immer auf einen Spannungswert gesteuert, der um die Potentialdifferenz über dem jeweiligen Momentanwert des Elektrolytpotentials im Bereich der Arbeitselektrode 33 liegt.

Der Ausgang der Summierschaltung 43 ist mit dem nicht-invertierenden Eingang eines Operationsverstärkers 47 verbunden, dessen invertierender Eingang mit der Zuleitung 35 der Arbeitselektrode 33 verbunden ist. Der Ausgang des Operationsverstärkers 47 ist über einen Widerstand R auf dessen invertierenden Eingang rückgekoppelt. Aufgrund des bekannten Verhaltens eines derart rückgekoppelten Operationsverstärkers stellt sich an dessen nicht-invertierendem Eingang das gleiche Potential wie an dessen invertierendem Eingang ein. Daher liegt auch an der Arbeitselektrode 33 das am Ausgang der Summierschaltung 43 auftretende Potential. Somit wird das Potential der Arbeitselektrode 33 zu jedem Zeitpunkt auf einen Wert gesteuert, der um die Potentialdifferenz von der Potentialdifferenzquelle 45 über dem Potentialmomentanwert des Elektrolyten im örtlichen Bereich der Arbeitselektrode 33 liegt. Schwankungen des Absolutwertes des Elektrolytpotentials können sich nicht mehr schädlich auswirken, da der Absolutwert des Potentials der Arbeitselektrode 33 entsprechend schwankend gesteuert wird, d.h. die Potentialdifferenz zwischem Elektrolytpotential und dem Arbeitselektrodenpotential jedoch auf konstantem Wert gehalten wird.

An der Arbeitselektrode 33 tritt ein elektrischer Strom auf, der von der jeweiligen momentanen Elektrolysierbarkeit der an der Arbeitselektrode 33 vorbeiströmenden elektrolytischen Lösung abhängt. Mit Hilfe des als Strom-Spannungs-Wandler dienenden Operationsverstärkers 47 wird der von der Arbeitselektrode 33 gelieferte Strom in eine entsprechende Spannung umgewandelt, die am Ausgang des Operationsverstärkers 47 zur Verfügung steht. Diese Ausgangsspannung des Operationsverstärkers 47 wird nach geeigneter Weiterverarbeitung, insbesondere einer Weiterverstärkung, Potentialanpassung und Filterung auf den Eingang eines Chromatogrammschreibers gegeben.

Dadurch, daß die Einlaßzuleitung 17, die Auslaßleitung 22 und der den Einlaß 19, den Einlaß 25 und die Meßelektrode 15 enthaltende Gehäuseteil 27 aus Metall bestehen, wird nicht nur die elektrolytische Lösung während ihres gesamten Strömungsweges vom Ausgang der Säule 11 bis zum Ausgang der Auslaßleitung 22 auf praktisch gleichem Potential gehalten sondern wird auch eine wirksame Abschirmung gegenüber Hochfrequenz-Störfeldern und elektrostatischen Störfeldern erreicht.

Gemäß einer besonders vorteilhaften Weiterbildung der Erfindung kann man auch den (in Figur 3) unteren Gehäuseteil 29 aus Metall machen, und zwar vorzugsweise aus dem gleichen Metall, aus dem der obere Gehäuseteil 27 besteht. Dabei werden dann die Arbeitselektrode 33 und deren Zuleitung 35 in dem unteren Gehäusemetallblock elektrisch isoliert gehalten. Vorzugsweise wird man dann die Arbeitselektrode 33 und auch die Meßelektrode 15, je einschließlich der Zuleitung, mit einer Abschirmung versehen. Beispielsweise wird man die Zuleitung 35 der Arbeitselektrode 33 als abgeschirmtes Kabel ausführen und die Abschirmung dieses Kabels mit dem metallischen Gehäuseteil 29 verbinden. Bei dieser Ausführungsform der Erfindung kann man auf einen abschirmenden Faraday-Käfig gänzlich verzichten.

Um die Abschirmung möglichst perfekt zu halten, führt man die metallische Einlaßzuleitung 17 bis in das Metallgehäuse der Säule 11. Weist die Säule 11 und/oder die der Säule 11 vorgeschaltete Pumpe in ihrem Metallgehäuse eine Elektrolytleitung aus Kunststoff auf, stellt man vorteilhafterweise zwischen der metallischen Einlaßzuleitung 17 und dem Metallgehäuse der Säule 11 und gegebenenfalls der Pumpe eine elektrische Verbindung her.

Die Meßelektrode ist üblicherweise in einem isolierenden Mantel angeordnet, der am Meßende der Meßelektrode mit einer ionendurchlässigen Membran abgeschlossen ist. Daher braucht man in dem metallischen Gehäuseteil 27 lediglich eine Öffnung 37 für die Meßelektrodenanordnung vorzusehen und zwischen der Meßelektrodenanordnung und der Meßelektrodenöffnung eine Dichtung 49 vorzusehen.

Bei dem in Figur 3 gezeigten elektrochemischen Detektor treten bei Stromfluß in der Arbeitselektrode 33 in dem durch die Durchlaßkammer 31 strömenden Elektrolyten Äquipotentialflächen auf, die näherungsweise parallel zu der oberen und der unteren Begrenzungsfläche der Durchlaßkammer 31 verlaufen. Der an die Arbeitselektrode 33 angrenzende Elektrolyt liegt daher auf einem anderen Potential als der an der Meßelektrode 15 vorhandene Elektrolyt.

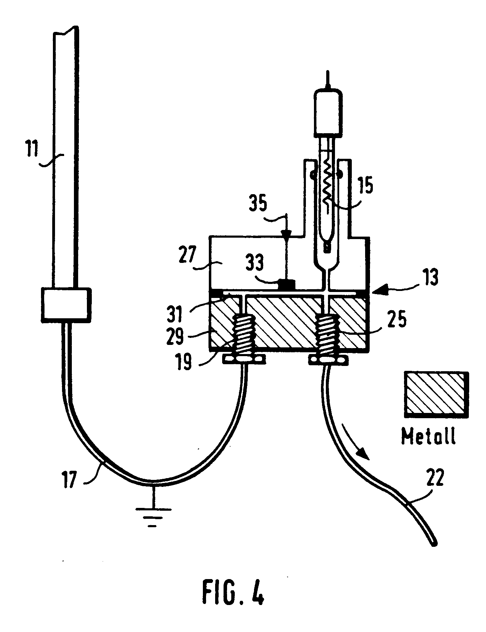

Figur 4 zeigt eine Ausführungsform des erfindungsgemäßen elektrochemischen Detektors, bei der die Arbeitselektrode 33 und eine Verbindung zur Meßelektrode 15 beide im oberen Gehäuseteil 27 und der Einlaß 19 und der Auslaß 25 im unteren Gehäuseteil 29 untergebracht sind. Der im Bereich der Arbeitselektrode 33 vorhandene und der im Bereich der Zuleitung zur Meßelektrode 15 vorhandene Elektrolyt liegen bei dieser Ausführungsform praktisch auf der gleichen Äquipotentialfläche, so daß hier noch eine Verbesserung gegenüber der in Figur 3 gezeigten Ausführungsform erreicht wird.

Ansonsten besteht im wesentlichen Übereinstimmung mit der Ausführungsform nach Figur 3. Auch in diesem Fall ist die Arbeitselektrode 33 mit dem invertierenden Eingang des Operationsverstärkers 47 verbunden und ist die Meßelektrode 15 an den Impedanzwandler 41 angeschlossen.

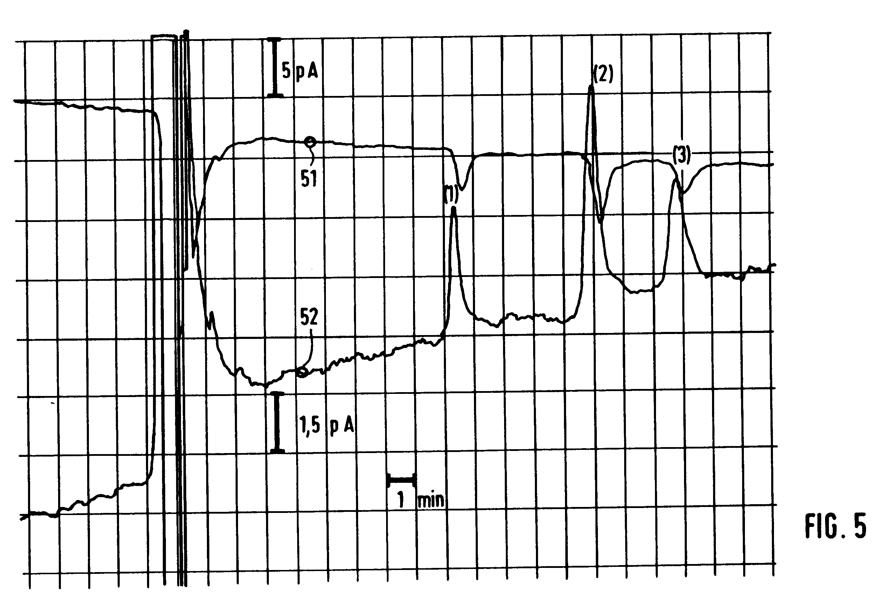

Figur 5 zeigt ein Chromatogramm, das mit Hilfe eines erfindungsgemäßen elektrochemischen Detektors im Zusammenwirken mit der im Zusammenhang mit Fig. 3 beschriebenen elektrischen Schaltung aufgenommen worden ist. Dieses Chromatogramm zeigt zwei Meßkurven 51 und 52, die beide auf dasselbe Meßsignal zurückgehen, jedoch mit einer unterschiedlichen Aufzeichnungsempfindlichkeit hergestellt worden sind. Die Empfindlichkeitsmaßstäbe sind über bzw. unter der Meßkurve 51 und 52 dargestellt.

Die Kurven 51 und 52 zeigen je einen Peak (1), der von 2,3 pg Noradrenalin stammt, einen Peak (2), der von 5,2 pg Di-Hydroxy-Benzylamin verursacht worden ist, und einen Peak (3), der auf 3,46 pg Adrenalin zurückgeht. Obwohl die Konzentrationen viel geringer sind als bei dem Chromatogramm in Figur 2, erheben sich diese Peaks viel stärker aus dem Grundrauschen heraus als in Figur 2. Wie ein Vergleich der unteren Kurve 52 mit dem für sie angegebenen Empfindlichkeitsmaßstab zeigt, weisen die Stör- und Rauschanteile, die dem Grundsignal dieses Chromatogramms überlagert sind, Spitze-Spitze-Werte von etwa 0,2 bis 0,3 $pA_{ss}$ auf. Dies stellt gegenüber dem in Figur 2 gezeigten Chromatogramm, das mit einem herkömmlichen elektrochemischen Detektor nach einem herkömmlichen Verfahren aufgenommen worden ist, eine Verbesserung um einen Faktor von mehr als 6 dar.

## Patentansprüche

1. Elektrochemischer Detektor mit einer Detektorzelle (13), die einen mit einem Einlaß (19) und einem Auslaß (25) in Verbindung stehenden Lösungsströmungsraum (31) aufweist, der von zwei an den Lösungsströmungsraum (31) angrenzenden Gehäuseteilen (27, 29) begrenzt wird, wobei durch das eine Gehäuseteil (29) eine Arbeitselektrode in den Lösungsströmungsraum (31) hineinreicht und der Einlaß (19), der Auslaß (25) und eine Öffnung (37) für eine Meßelektrode (15) in dem anderen Gehäuseteil (27) gebildet sind, und wobei der Einlaß (19) über eine Einlaßzuleitung (17) mit einer Lösungsquelle (11), wie einer analytischen Säule, und der Auslaß (25) über eine Auslaßleitung (22) mit einer Ablaufeinrichtung verbunden ist,

dadurch **gekennzeichnet,**
daß das den Einlaß (19), den Auslaß (25) und die Öffnung (37) für die Meßelektrode (15) aufweisende Gehäuseteil (27) aus einem einstückigen Metallblock gebildet ist und daß die Einlaßzuleitung (17) bis hin zur Lösungsquelle (11) aus Metall gebildet ist oder mit Metall beschichtet ist.

2. Elektrochemischer Detektor mit einer Detektorzelle (13), die einen mit einem eine Einlaßzuleitung (17) aufnehmenden Einlaß (19) und mit einem eine Auslaßleitung (22) aufnehmenden Auslaß (25) in Verbindung stehenden Lösungsströmungsraum (31) aufweist, der von zwei an den Lösungsströmungsraum (31) angrenzenden Gehäuseteilen (27, 29) begrenzt wird, wobei durch eines der Gehäuseteile eine Arbeitselektrode (33) in den Lösungsströmungsraum (31) hineinreicht und in einem der Gehäuseteile eine Öffnung für eine Meßelektrode (15) gebildet ist und wobei die Einlaßzuleitung (17) mit einer Lösungsquelle (11) verbunden ist, dadurch gekennzeichnet, daß ein erstes Gehäuseteil (29) den Einlaß (19) und den Auslaß (25) und das zweite Gehäuseteil (27) die Öffnungen für die Arbeitselektrode (33) und die Meßelektrode (15) aufweist, daß das erste Gehäuseteil (29) aus einem einstückigen Metallblock gebildet ist und daß die Einlaßzuleitung (17) bis hin zur Lösungsquelle (11) aus Metall gebildet ist oder mit Metall beschichtet ist.

3. Elektrochemischer Detektor nach einem der Ansprüche 1 oder 2, dadurch gekennzeichnet, daß die Auslaßleitung (22) aus Metall gebildet ist oder mit Metall beschichtet ist.

4. Elektrochemischer Detektor nach einem der Ansprüche 1 bis 3, dadurch gekennzeichnet, daß die Einlaßzuleitung (17) und bei Ausbildung nach Anspruch 3 auch die Auslaßleitung (22) aus dem für das Gehäuse (27, 29) verwendeten Metall gebildet sind bzw. mit diesem Metall beschichtet sind.

5. Elektrochemischer Detektor nach einem der Ansprüche 1 bis 4, dadurch gekennzeichnet, daß beide Gehäuseteile (27, 29) aus Metall bestehen, wobei die Arbeitselektrode (33) und die Meßelektrode (15) in den sie je aufnemenden Gehäuseteil (27, 29) isoliert eingebettet sind.

6. Elektrochemischer Detektor nach Anspruch 5,

dadurch gekennzeichnet,
daß beide Gehäuseteile (27, 29) aus dem gleichen Metall bestehen.

7. Elektrochemischer Detektor nach Anspruch 5 oder 6,
dadurch gekennzeichnet,
daß die Arbeitselektrode (33) einschließlich ihrer Zuleitung mit einer Abschirmung versehen ist.

8. Elektrochemischer Detektor nach Anspruch 7,
dadurch gekennzeichnet,
daß die Meßelektrode (15) einschließlich ihrer Zuleitung mit einer Abschirmung versehen ist.

9. Elektrochemischer Detektor nach einem der Ansprüche 1 bis 8, dadurch gekennzeichnet, daß dann, wenn die Säule (11) und/oder die der Säule (11) vorgeschaltete Pumpe in ihrem Metällgehäuse eine Elektrolytleitung aus Kunststoff aufweisen/aufweist, zwischen der metallischen Einlaßzuleitung (17) und dem Metallgehäuse der Säule (11) und gegebenenfalls der Pumpe eine elektrische Verbindung vorgesehen ist.

10. Elektrochemischer Detektor nach einem der Ansprüche 1 bis 9, dadurch gekennzeichnet, daß die Hilfselektrodenfunktion aufweisenden Metällteile (17, 22, 27) der die elektrochemische Detektorzelle, die Einlaßleitung (17) und die Auslaßleitung (22) aufweisenden Anordnung auf Massepotential gelegt sind.

**Claims**

1. An electrochemical detector comprising a detector cell (13) comprising a solution flow cavity (31) connecting an inlet (19) and an outlet (25), the solution flow cavity (31) being delineated by two housing members (27,29) bordering the solution flow cavity (31), a working electrode extending through the one housing member (29) into the solution flow cavity (31) and the inlet (19), the outlet (25) and an opening (37) for a sensing electrode (15) being defined in the other housing member (27), the inlet (19) being connected via an inlet feed line (17) to a solution source (11), such as an analytical column, and the outlet (25) being connected via an outlet line (22) to discharge means,
**characterized in that**
the housing member (27) comprising the inlet (19), the outlet (25) and the opening (37) for the sensing electrode (15) is defined by a one-piece metal block and that the inlet feed line (17) up to the solution source (11) consists of metal or is metal-coated.

2. An electrochemical detector comprising a detector cell (13) comprising a solution flow cavity (31) connecting an inlet (19) porting an inlet feed line (17) and an outlet (25) porting an outlet line (22), the solution flow cavity (31) being delineated by two housing members (27,29) bordering the solution flow cavity (31), a working electrode (33) extending through one of the housing members into the solution flow cavity (31) and an opening (37) for a sensing electrode (15) being defined in one of the housing members, the inlet feed line (17) being connected to a solution source (11), characterized in that a first housing member (29) comprises the inlet (19) and the outlet (25) and the second housing member (27) comprises the openings for the working electrode (33) and the sensing electrode (15), that the first housing member (29) is defined by a one-piece metal block and that the inlet feed line (17) up to the solution source (11) consists of metal or is metal-coated.

3. An electrochemical detector set forth in any of the claims 1 or 2, characterized in that the outlet line (22) consists of metal or is metal-coated.

4. An electrochemical detector set forth in any of the claims 1 to 3, characterized in that the inlet feed line (17) and where embodied set forth in claim 3 also the outlet line (22) consist of the metal used for the housing (27,29) or are coated with this metal.

5. An electrochemical detector set forth in any of the claims 1 to 4, characterized in that both housing members (27,29) consist of metal, the working electrode (33) and the sensing electrode (15) being embedded insulated in the housing member (27,29) accommodating them.

6. An electrochemical detector set forth in claim 5, characterized in that both housing members (27,29) consist of the same metal.

7. An electrochemical detector set forth in claims 5 or 6, characterized in that the working electrode (33) including its feed line is provided with a shield.

8. An electrochemical detector set forth in claim 7, characterized in that the sensing electrode (15) including its feed line is provided with a shield.

9. An electrochemical detector set forth in any of the claims 1 to 8, characterized in that when the metal housing of the column (11) and/or pump upstream of the column (11) comprises an electrolyte line of plastic, an electrical connection is provided between the metal inlet feed line (17) and the metal housing of the column (11) and/or of the pump.

10. An electrochemical detector set forth in any of the claims 1 to 9, characterized in that the auxiliary electrode functioning metal members (17,22,27) of the arrangement comprising the electrochemical detector cell, the inlet feed line (17) and the outlet line (22) are placed at ground potential.

**Revendications**

1. Détecteur électrochimique muni d'une cellule détectrice (13) qui présente une cavité de circulation de solution (31) reliée à une entrée (19) et à une sortie (25) et qui est limitée par deux parties de boîtier (27, 29) voisines de la cavité de circulation de solution (31), dans lequel une électrode de travail pénètre dans la cavité de circulation de solution (31) par une partie de boîtier (29), et l'entrée (19), la sortie (25) et une ouverture (37) pour une électrode de mesure (15) sont formées dans l'autre partie de boîtier (27), et dans lequel l'entrée (19) est reliée par une conduite d'entrée (17) à une source de solution (11), telle qu'une colonne analytique, et la sortie (25) est reliée par une conduite de sortie (22) à un dispositif d'évacuation, caractérisé en ce que la partie de boîtier (27) qui comporte l'entrée (19), la sortie (25) et l'ouverture (37) pour l'électrode de mesure (15) est constituée par un bloc métallique d'une pièce et en ce que la conduite d'entrée (17) est constituée par un métal ou est revêtue de métal jusqu'à la source de solution (11).

2. Détecteur électrochimique muni d'une cellule détectrice (13) qui présente une cavité de circulation de solution (31) qui communique avec une entrée (19) qui reçoit une conduite d'entrée (17) et avec une sortie (25) qui reçoit une conduite de sortie (22), cavité de circulation de solution (31) qui est limitée par deux parties de boîtier voisines de la cavité de circulation de solution (31), dans lequel une électrode de travail (33) pénètre dans la cavité de circulation de solution (31) par l'une des parties de boitier et une ouverture destinée à une électrode de mesure (15) est formée dans l'une des parties de boîtier, et dans lequel la conduite d'entrée (17) est reliée à une source de solution (11), caractérisé en ce qu'une première partie de boîtier (29) comporte l'entrée (19) et la sortie (25) et la deuxième partie de boîtier (27) comporte les ouvertures pour l'électrode de travail (33) et l'électrode de mesure (15), en ce que la première partie de boîtier (29) est constituée par un bloc métallique d'une pièce et en ce que la conduite d'entrée (17) est constituée par un métal ou est revêtue de métal jusqu'à la source de solution (11).

3. Détecteur électrochimique selon l'une des revendications 1 ou 2, caractérisé en ce que la conduite de sortie (22) est constituée par un métal ou est revêtue de métal.

4. Détecteur électrochimique selon l'une des revendications 1 à 3, caractérisé en ce que la conduite d'entrée (17) et, dans le cas de l'agencement selon la revendication 3, également la conduite de sortie (22) sont constituées par le métal utilisé pour le boîtier (27, 29) ou sont revêtues de ce métal.

5. Détecteur électrochimique selon l'une des revendications 1 à 4, caractérisé en ce que les deux parties de boîtier (27, 29) sont en métal, l'électrode de travail (33) et l'électrode de mesure (15) étant noyées de manière isolée dans la partie de boîtier (27, 29) respective qui les reçoit.

6. Détecteur électrochimique selon la revendication 5, caractérisé en ce que les deux parties de boîtier (27, 29) sont constituées par le même métal.

7. Détecteur électrochimique selon la revendication 5 ou 6, caractérisé en ce que l'électrode de travail (33), y compris son conducteur d'amenée, est munie d'un blindage.

8. Détecteur électrochimique selon la revendication 7, caractérisé en ce que l'électrode de mesure (15), y compris son conducteur d'amenée, est munie d'un blindage.

9. Détecteur électrochimique selon l'une des revendications 1 à 8, caractérisé en ce que, lorsque la colonne (11) et/ou la pompe branchée en amont de la colonne (11) présentent dans leur boîtier métallique une conduite d'électolyte en matière plastique, il est prévu une liaison électrique entre la conduite d'entrée métallique (17) et le boîtier métallique de la colonne (11) et éventuellement de la pompe.

10. Détecteur électrochimique selon l'une des revendications 1 à 9, caractérisé en ce que les parties métalliques (17, 22, 27) qui présentent une fonction d'électrode auxiliaire de l'agencement qui comporte la cellule détectrice électrochimique, la conduite d'entrée (17) et la conduite de sortie (22) sont au potentiel de la masse.

10

FIG. 1

FIG. 2

FIG. 3

Metall

FIG. 4

FIG. 5